Europäisches Patentamt

European Patent Office

Office européen des brevets

(19)

(11) Veröffentlichungsnummer: **0 334 063 B1**

(12) **EUROPÄISCHE PATENTSCHRIFT**

(45) Veröffentlichungstag der Patentschrift: 28.11.90

(51) Int. Cl.⁵: **F16H 7/12**

(21) Anmeldenummer: 89103612.1

(22) Anmeldetag: 02.03.89

(54) Spannvorrichtung für Riemen.

(30) Priorität: 19.03.88 DE 3809362

(43) Veröffentlichungstag der Anmeldung:
27.09.89 Patentblatt 89/39

(45) Bekanntmachung des Hinweises auf die Patenterteilung:
28.11.90 Patentblatt 90/48

(84) Benannte Vertragsstaaten:
DE ES FR GB IT

(56) Entgegenhaltungen:
EP-A- 0 038 233
DE-A- 2 535 676
DE-B- 1 112 363
FR-A- 2 320 470
FR-A- 2 510 217

PATENT ABSTRACTS OF JAPAN, Band 7,
Nr. 227 (M-248)[1372], 7. Oktober 1983, Seite 156 M 248;
& JP-A-58 121 344 (TOYOTA JIDOSHA KOGYO K.K.) 19-07-1983
PATENT ABSTRACTS OF JAPAN, Band 7,
Nr. 287 (M-264)[1432], 21. Dezember 1983,
Seite 74 M 264; & JP-A-58 160 660 (AISHIN SEIKI K.K.) 24-09-1983
PATENT ABSTRACTS OF JAPAN, Band 11,
Nr. 98 (M-575)[2545], 27. November 1987,

(73) Patentinhaber: INA Wälzlager Schaeffler KG,
Industriestrasse 1-3 Postfach 1220,
D-8522 Herzogenaurach(DE)

(72) Erfinder: Hertrich, Steffen, Orionstrasse 8,
D-8522 Herzogenaurach(DE)
Erfinder: Goppelt, Dieter, Kärtner Strasse 1,
D-8521 Aurachtal(DE)

(74) Vertreter: Klug, Horst, Dipl.-Ing. (FH), c/o INA Wälzlager
Schaeffler KG Postfach 12 20,
D-8522 Herzogenaurach(DE)

(56) Entgegenhaltungen: (Fortsetzung)
Seite 140 M 575; & JP-A-61 248 952 (MAZDA MOTOR CORP.) 06-11-1986

## Beschreibung

Die Erfindung betrifft eine Spannvorrichtung für Riemen, Ketten oder dergleichen, insbesondere für den Nockenwellenantrieb einer Brennkraftmaschine, mit einer Spannrolle, die auf einem beweglichen Träger gelagert ist, und mit einem Steuerelement, von welchem bei Erwärmung der Träger über ein Betätigungsorgan entgegen der Wirkung einer Druckfeder in Entspannungsrichtung des Riemens bewegbar ist, wobei das Steuerelement einen Aufnahmeraum für eine temperaturabhängige, Volumenänderungen aufweisende Druckflüssigkeit enthält.

Bei Verwendung von Riemen- oder Kettentrieben an Maschinen, die Temperatuschwankungen unterworfen sind, beispielsweise an Verbrennungsmotoren, treten infolge von Wärmedehnungen Vergrößerungen der Achsabstände der treibenden und angetriebenen Riemenscheiben auf, so daß die Riemenspannung auf unerwünscht hohe Werte anwachsen kann. Zum Ausgleich derartiger Spannungsvergrößerungen werden Spannvorrichtungen eingesetzt.

Aus dem Dokument DE-A 2 535 676 ist eine Spannvorrichtung bekannt, deren temperaturabhängiges Steuerelement auf einen zweiarmigen Schwenkhebel einwirkt, der über einen als Druckfeder wirkenden elastischen Block mit dem Träger einer Spannrolle verbunden ist. Das Steuerelement ist dort als Thermoelement mit einem Meßfühler und einem Motor als Verstelleinrichtung ausgebildet, der eine axiale Verschiebung eines Stellgliedes und über dieses eine Bewegung des Schwenkhebels in Abhängigkeit von der Temperaturänderung bewirkt.

Auch aus dem Dokument EP-A 0 038 233 ist eine Spannvorrichtung bekannt, die in Abhängigkeit von der Temperatur die Lage einer Spannrolle einstellt. Dort wirkt das als Wärmedehnungszylinder ausgebildete Steuerelement gegen die Wirkung einer Schraubendruckfeder auf einen exzentrisch gelagerten kreisförmigen Träger einer Spannrolle ein, wobei mit steigender Temperatur die Spannrolle in Entspannungsrichtung verlagert wird.

Das Dokument JP-A 58 160 660 zeigt eine Süannvorrichtung der eingangs genannten Art, bei der das als Zylinder ausgeführte Steuerelement als Betätigungselement eine axial herausragende Kolbenstange aufweist. In dem Zylinderraum ist ein mit der Kolbenstange verbundener Kolben längsverschieblich geführt, der den Aufnahmeraum für die Druckflüssigkeit von dem Druckfederraum trennt. Auch das Dokument JP-A 61 248 952 zeigt ein solches Steuerelement für eine Spannvorrichtung.

Bei Verwendung eines solchen Druckmittelzylinders als Steuerelement, in welchem die temperaturabhängige Ausdehnung einer Druckflüssigkeit, beispielsweise eines Hydrauliköls, zur Verschiebung einer Kolbenstange und über diese zur Verschiebung eines Spannrollenträgers ausgenutzt werden soll, besteht das Problem der Abdichtung des von dem Kolben begrenzten Flüssigkeitsraumes. Infolge der Kolbenbewegungen ergeben sich ständig Leckverluste der Druckflüssigkeit an der inneren Zylinderwand, auch bei Verwendung von gleitenden Dichtungsringen zwischen Zylinder und Kolben.

Der Erfindung liegt daher die Aufgabe zugrunde, eine gattungsgemäße Spannvorrichtung mit einem sicher und dauerhaft arbeitenden Steuerelement zu schaffen.

Diese Aufgabe wird erfindungsgemäß dadurch gelöst, daß der Aufnahmeraum mittels einer mit dem Betätigungsorgan verbundenen Membran verschlossen ist, die in dem Steuerelement festgehalten ist. Auf diese Weise kann bei der Erwärmung und der damit verbundenen Volumenvergrößerung der Druckflüssigkeit eine elastische Verformung der Membran erfolgen, die eine entsprechende Vergrößerung des Aufnahmeraums bewirkt, ohne daß sich gleitende Dichtungsflächen ergeben. Über die Membran wird dabei eine von dem Flüssigkeitsdruck erzeugte Schubkraft auf das Betätigungsorgan übertragen. Bei der Abkühlung bewirkt die Druckfeder eine Rückstellung des Betätigungsorgans und der Membran entsprechend der Verkleinerung des Flüssigkeitsvolumens.

Die Membran kann von einem in dem Steuerelement festlegbaren Stützring gehalten sein, so daß Beanspruchungen der Membran im Randbereich infolge von Befestigungsmaßnahmen vermieden werden.

Das Steuerelement ist bevorzugt als Druckmittelzylinder ausgebildet, in dessen Bohrung der Stützring mittels eines Sprengringes axial abgestützt ist. Auf diese Weise ergibt sich eine einfache Festlegung des Stützringes in dem Steuerelement, wobei der Stützring nur zur Außenseite des Steuerelementes hin gehalten zu werden braucht, weil er zur Innenseite hin von der Druckflüssigkeit beaufschlagt ist.

Die Membran kann aus einem gummielastischen Werkstoff bestehen und an ihrem Umfang einen Flansch aufweisen, über den sie an einer ringförmigen Stützfläche innerhalb des Stützringes axial gehalten ist. Diese Ausbildung ermöglicht es, den Stützring und die Membran etwa mit derselben Dicke auszuführen, so daß die Membran-Stützring-Einheit ein scheibenförmiges Bauteil darstellt.

Das Betätigungsorgan kann als Druckkolben ausgebildet sein, der an seinem in dem Steuerelement befindlichen Ende mit der Membran verbunden ist. Ein solcher Kolben weist keine unmittelbaren Berührungsstellen mit dem Gehäuse des Steuerelements auf, so daß Probleme infolge gleitender Reibung und damit verbundener Leckverluste an Druckflüssigkeit entfallen. Für den Endbereich des Druckkolbens kann innerhalb einer zentralen Bohrung der Membran eine durch einen Boden einseitig verschlossene Aufnahmehülse befestigt sein. Dadurch wird eine Zentrierung des Druckkolbens erreicht.

Eine sichere und dauerhafte Befestigung der Aufnahmehülse in der Membran ergibt sich dadurch, daß die Aufnahmehülse in die Bohrung der Membran einvulkanisiert ist.

Wenn die Druckfeder in dem Zylindergehäuse des Steuerelements angeordnet ist und sich mit einem Ende an dem Druckkolben und mit dem anderen Ende an dem Gehäuse abstützt, ergibt sich eine kompakte Baueinheit für das Steuerelement mit dem Betätigungsorgan. Dadurch, daß die Anordnung der Druckfeder an anderer Stelle entfällt, läßt sich somit die Spannvorrichtung konstruktiv vereinfachen. Ein defektes Steuerelement kann auf diese Weise einschließlich der Druckfeder und des Druckkolbens in einfacher Weise ausgewechselt werden.

Als Druckfeder kann eine den Druckkolben umgebende Tellerfeder verwendet werden, so daß eine hohe Federkraft in geringem Bauraum erzeugt werden kann, die der Druckkraft der Druckflüssigkeit infolge der thermischen Ausdehnung entspricht. Es ist aber auch möglich, statt der Tellerfeder eine Schraubenfeder zu verwenden.

Bevorzugte Ausführungsformen der Erfindung sind in den Schutzansprüchen enthalten. Der Schutzumfang erstreckt sich nicht nur auf die beanspruchten Einzelmerkmale, sondern auch auf deren Kombination.

Ein Ausführungsbeispiel der Erfindung ist in der Zeichnung dargestellt und wird im folgenden näher beschrieben. Es zeigen:

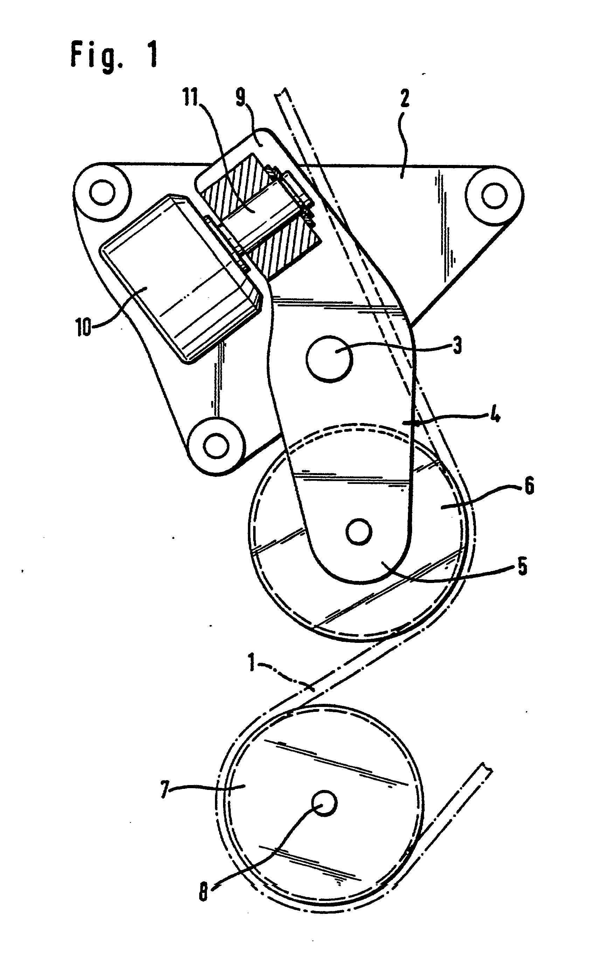

Figur 1 eine schematische Ansicht einer Spannvorrichtung mit einem um eine Riemenscheibe und eine Spannrolle gelegten Riemen;

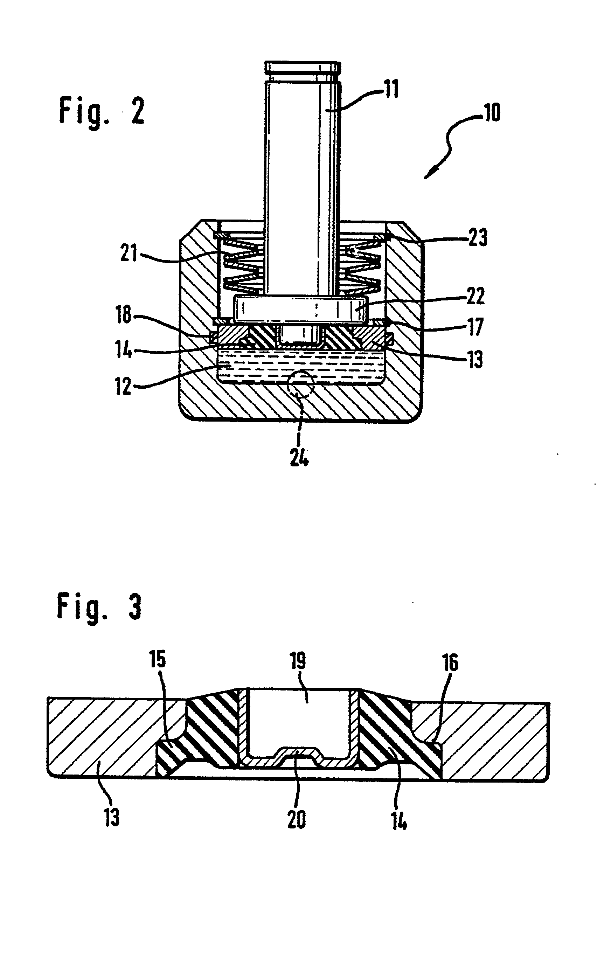

Figur 2 ein Steuerelement der Spannvorrichtung in einem Längsschnitt mit eingebauter Membran;

Figur 3 die in dem Steuerelement eingebaute, in einem Stützring gehaltene Membran gemäß Figur 2 in vergrößerter Darstellung.

Eine erfindungsgemäße Spannvorrichtung für den Riemen 1 des Nockenwellenantriebs einer Brennkraftmaschine weist eine an der Maschine festlegbare Grundplatte 2 auf, an der um eine feste Schwenkhebelachse 3 ein Schwenkhebel 4 gelagert ist. An einem unteren Ausleger 5 des Schwenkhebels 4 ist eine Spannrolle 6 gelagert, mit welcher der von einer Riemenscheibe 7 der Achse 8 der Kurbelwelle zu der nicht dargestellten Nockenwelle verlaufende Riemen 1 gespannt wird.

An einem oberen Ausleger 9 des Schwenkhebels 4 greift ein auf der Grundplatte 2 befestigtes Steuerelement 10 mit einem Druckkolben 11 an. Beim Ausfahren des Druckkolbens 11 aus dem Gehäuse des Steuerelements 10 wird eine Verschwenkung des Schwenkhebels 4 hervorgerufen, die der Spannrichtung der Spannrolle 6 entgegengesetzt gerichtet ist. Mit infolge der Erwärmung der Brennkraftmaschine im Betrieb größer werdendem Achsabstand der Nockenwelle und der Achse 8 der Kurbelwelle steigt die Vorspannung des Riemens 1 an. Dieser Anstieg der Riemenspannung wird durch Ausfahren des Druckkolbens 11 und die damit verbundene Verschwenkung der Spannrolle 6 in Entspannungsrichtung ausgeglichen.

Das Steuerelement 10 ist als Hydraulikzylinder ausgebildet, der einen geschlossenen Aufnahmeraum 12 für eine Druckflüssigkeit aufweist. In der Bohrung des Steuerelements 10 befindet sich ein Stützring 13 mit einer Membran 14, die aus einem gummielastischen Werkstoff besteht und sich in einer zentralen Öffnung des Stützringes 13 befindet. Dort ist die Membran 14 mit einem angeformten Flansch 15 an einer ringförmigen Stützfläche 16 des Stützringes 13 axial gehalten. Zur Festlegung des Stützringes 13 in der Bohrung des Steuerelements 10 dient ein Sprengring 17, der eine axiale Verschiebung des Stützringes 13 zur Außenseite des Steuerelements 10 verhindert. Eine Verschiebung in entgegengesetzter Richtung ist nicht möglich, weil dort der Stützring 13 mit der Membran 14 von der Druckflüssigkeit abgestützt ist, die sich in dem Aufnahmeraum 12 befindet. Mit Hilfe eines Dichtungsringes 18 ist der Stützring in dem Steuerelement 10 abgedichtet.

Der Druckkolben 11 ist mit seinem in dem Steuerelement 10 befindlichen Ende in eine Aufnahmehülse 19 gesteckt, die an ihrer der Druckflüssigkeit zugewandten Stirnseite mit einem Boden 20 verschlossen ist und sich in einer zentralen Öffnung der Membran 14 befindet. Die Aufnahmehülse 19 ist in die Öffnung der Membran 14 einvulkanisiert, so daß sich hier eine feste und dichte Verbindung ergibt. Mit Hilfe der Aufnahmehülse 19 ist der Druckkolben 11 in dem Steuerelement zentriert.

Der Druckkolben 11 ist innerhalb des Steuerelements 10 von einer Tellerfeder 21 umgeben, die sich an ihrem dem Aufnahmeraum 12 zugewandten Ende an einem Bund 22 des Druckkolbens 11 und an ihrem anderen Ende an einem Sprengring 23 innerhalb des Gehäuses des Steuerelementes 10 abstützt. Diese Druckfeder ist also bestrebt, den Druckkolben 11 in das Gehäuse hineinzudrücken, während bei Erwärmung des Steuerelementes 10 die sich ausdehnende Druckflüssigkeit den Druckkolben 11 entgegen der Wirkung der Tellerfeder 21 aus dem Gehäuse herausbewegt.

Für eine Einstellung des Maßes der Verschwenkung des Schwenkhebels 4 und somit der Spannkraft der Spannrolle 6 läßt sich die Menge der Druckflüssigkeit verändern. Zu diesem Zweck weist der Aufnahmeraum 12 eine Füllschraube 24 auf. Eine Einstellung kann außerdem durch Verstellung des Steuerelementes 10 auf der Grundplatte 2 erfolgen. Dafür können Langlöcher an der Grundplatte für die Montage des Steuerelements 10 vorgesehen werden.

**Patentansprüche**

1. Spannvorrichtung für Riemen (1), Ketten oder dergleichen, insbesondere für den Nockenwellenantrieb einer Brennkraftmaschine, mit einer Spannrolle (6), die auf einem beweglichen Träger gelagert ist, und mit einem Steuerelement (10), von welchem bei Erwärmung der Träger über ein Betätigungsorgan entgegen der Wirkung einer Druckfeder in Entspannungsrichtung des Riemens (1) bewegbar ist, wobei das Steuerelement (10) einen Aufnahmeraum (12) für eine temperaturabhängige, Volumenänderungen aufweisende Druckflüssigkeit enthält, dadurch gekennzeichnet, daß der Aufnahmeraum (12) mittels einer mit dem Betätigungsorgan verbundenen Membran (14) verschlosen ist, die in dem Steuerelement (10) festgehalten ist.

2. Spannvorrichtung nach Anspruch 1, **dadurch gekennzeichnet**, daß die Membran (14) von einem in dem Steuerelement (10) festgelegten Stützring (13) gehalten ist.

3. Spannvorrichtung nach den Ansprüchen 1 und 2, **dadurch gekennzeichnet**, daß das Steuerelement (10) als Druckmittelzylinder ausgebildet ist, in dessen Bohrung der Stützring (13) mittels eines Sprengringes (17) axial abgestützt ist.

4. Spannvorrichtung nach den Ansprüchen 1 und 2, **dadurch gekennzeichnet**, daß die Membran (14) aus einem gummielastischen Werkstoff besteht und an ihrem Umfang einen Flansch (15) aufweist, über den sie an ihrer ringförmigen Stützfläche (16) innerhalb des Stützringes (13) axial gehalten ist.

5. Spannvorrichtung nach einem der vorhergehenden Ansprüche, **dadurch gekennzeichnet**, daß das Betätigungsorgan als Druckkolben (11) ausgebildet ist, der an seinem in dem Steuerelement (10) befindlichen Ende mit der Membran (14) verbunden ist.

6. Spannvorrichtung nach einem der vorhergehenden Ansprüche, **dadurch gekennzeichnet**, daß innerhalb einer zentralen Bohrung der Membran (14) eine durch einen Boden (20) einseitig verschlossene Aufnahmehülse (19) für den Endbereich des Druckkolbens (11) befestigt ist.

7. Spannvorrichtung nach einem der vorhergehenden Ansprüche, **dadurch gekennzeichnet**, daß die Aufnahmehülse (19) in die Bohrung der Membran (14) einvulkanisiert ist.

8. Spannvorrichtung nach einem der vorhergehenden Ansprüche, **dadurch gekennzeichnet**, daß die Druckfeder in dem Zylindergehäuse des Steuerelements (10) angeordnet ist, wobei sie sich mit einem Ende an dem Druckkolben (11) und mit dem anderen Ende an dem Gehäuse abstützt.

9. Spannvorrichtung nach Anspruch 8, **dadurch gekennzeichnet**, daß die Druckfeder eine den Druckkolben (11) umgebende Tellerfeder (21) ist.

10. Spannvorrichtung nach Anspruch 8, **dadurch gekennzeichnet**, daß die Druckfeder eine den Druckkolben (11) umgebende Schraubenfeder ist.

## Claims

1. Tensioning device for belts (1), chains or the like, in particular for the camshaft drive of an internal combustion engine, which device comprises a tension roller (6) mounted on a movable support and a control element (10) by which, on heating, the support can be moved via an actuating member in the relaxing direction of the belt (1) against the action of a compression spring, the control element (10) containing a receiving space (12) for a temperature-dependent pressure fluid undergoing volume variations, characterized in that the receiving space (12) is closed by means of a membrane (14) connected to the actuating member and securely fixed in the control element (10).

2. Tensioning device according to claim 1, characterized in that the membrane (14) is retained by a back-up ring (13) fixed in the control element (10).

3. Tensioning device according to claims 1 and 2, characterized in that the control element (10) is in the form of a pressure-medium cylinder in whose bore the back-up ring (13) is axially supported by means of a circlip (17).

4. Tensioning device according to claims 1 and 2, characterized in that the membrane (14) is made of a rubber-like elastic material and comprises a flange (15) at its periphery by which it is axially retained at its annular supporting surface (16) within the back-up ring (13).

5. Tensioning ring according to one of the preceding claims, characterized in that the actuating member is in the form of a pressure piston (11) which, at its end located in the control element (10), is connected to the membrane (14).

6. Tensioning device according to one of the preceding claims, characterized in that a receiving sleeve (19) closed at one end by a bottom (20) is fixed a central bore of the membrane (14) for receiving the end region of the pressure piston (11).

7. Tensioning device according to one of the preceding claims, characterized in that the receiving sleeve (19) is vulcanized into the bore of the membrane (14).

8. Tensioning device according to one of the preceding claims, characterized in that the compression spring is arranged in the cylindrical housing of the control element (10) and supported at one end on the pressure piston (11) and at the other, against the housing.

9. Tensioning device according to claim 8, characterized in that the compression spring is a disk spring (21) surrounding the pressure piston (11).

10. Tensioning device according to claim 8, characterized in that the compression spring is a helical spring surrounding the pressure piston (11).

## Revendications

1. Tendeur de courroie (1), de chaîne ou analogue, en particulier pour la commande de la distribution d'un moteur à combustion interne, comprenant un galet-tendeur (6) monté sur un support mobile et un élément de commande (10) par lequel, lors du réchauffement, le support peut être déplacé à l'aide d'un organe d'actionnement dans le sens de la détente de la courroie (1) à l'encontre de l'action d'un ressort de pression, l'élément de commande (10) comprenant un espace de réception (12) pour un liquide hydraulique subissant des variations de volume en fonction de la température, caractérisé en ce que l'espace de réception (12) est fermé au moyen d'une membrane (14) reliée à l'organe d'actionnement et retenue dans l'élément de commande (10).

2. Tendeur de courroie selon la revendication 1, caractérisé en ce que la membrane (14) est retenue par une bague d'appui (13) qui est fixée dans l'élément de commande (10).

3. Tendeur de courroie selon les revendications 1 et 2, caractérisé en ce que l'élément de commande (10) est conformé en vérin hydraulique dans l'alésage duquel la bague d'appui (13) est axialement supportée par un jonc (17).

4. Tendeur de courroie selon les revendications 1 et 2, caractérisé en ce que la membrane (14) est constituée d'une matière élastique du type caoutchouc et comprend une bride (15) à sa périphérie au moyen de laquelle elle est retenue axialement à sa surface annulaire d'appui (16) à l'intérieur de la bague d'appui (13).

5. Tendeur de courroie selon une des revendications précédentes, caractérisé en ce que l'organe d'actionnement est sous la forme d'un piston de pression (11) relié, à son extrémité qui se trouve dans l'élément de commande (10), à la membrane (14).

6. Tendeur de courroie selon une des revendications précédentes, caractérisé en ce qu'un manchon de réception (19), fermé d'un côté par un fond (20) et servant à recevoir la partie extrême du piston de pression (11), est fixé dans un alésage central de la membrane (14).

7. Tendeur de courroie selon une des revendications précédentes, caractérisé en ce que le manchon de réception (19) est vulcanisé dans l'alésage de la membrane (14).

8. Tendeur de courroie selon une des revendications précédentes, caractérisé en ce que le ressort de pression est agencé dans le boîtier cylindrique de l'élément de commande (10) et s'appuie par une de ses extrémités sur le piston de pression (11) et par l'autre, contre le boîtier.

9. Tendeur de courroie selon la revendication 8, caractérisé en ce que le ressort de pression est un ressort disques (21) entourant le piston de pression (11).

10. Tendeur de courroie selon la revendication 8, caractérisé en ce que le ressort de pression est un ressort à boudin entourant le piston de pression (11).

# Fig. 1

Fig. 2

Fig. 3